(19) Europäisches Patentamt
European Patent Office
Office européen des brevets

(11) **EP 2 667 149 A1**

(12) **EUROPEAN PATENT APPLICATION**

(43) Date of publication:
**27.11.2013 Bulletin 2013/48**

(51) Int Cl.:
**G01B 11/10** [(2006.01)]  **G01B 11/245** [(2006.01)]
**G01B 11/25** [(2006.01)]  **B61K 9/12** [(2006.01)]

(21) Application number: **12380026.0**

(22) Date of filing: **24.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Ideko, S. Coop**
  **20870 Elgoibar Guipuzcoa (ES)**
• **Danobat Railway Systems S.COOP**
  **20570 Bergara (Guipuzcoa) (ES)**

(72) Inventors:
• **Mendikute Garate, Alberto**
  **20570 Bergara (Guipuzcoa) (ES)**
• **Zatarain Gordoa, Mikel**
  **20007 Donostia (Guipuzcoa) (ES)**
• **Ugarte Azpiri, Ignacio Javier**
  **20570 Bergara (Guipuzcoa) (ES)**

(74) Representative: **Cabinet Plasseraud**
  **52, rue de la Victoire**
  **75440 Paris Cedex 09 (FR)**

(54) **Measuring method for determining the section and the diameter of wheels of moving railway vehicles and measuring equipment used**

(57) The present invention relates to a measuring method for determining the section and the diameter of wheels of moving railway vehicles and measuring equipment used, comprising:
- Projecting a first and a second structured light beam (L1, L2) from a first and a second measuring unit (3, 3")
- Measuring the coordinates of the points of light of each structured light beam (L1, L2)
- Calculating an approximation of the spatial orientation and location of the axis (R) of the wheel (1)
- Rotating the system of X, Y, Z coordinates
- Calculating the radius of the points of light of each beam
- Determining the differences in radius existing between the points of light of each beam
- Modifying the spatial location and orientation of the axis (R) of the wheel (1)
- Obtaining the diameter and the section of the flange (1.2) and the contact surface (1.3).

Fig. 1

**Description**

Field of the Art

The present invention relates to measuring the contact sections of the wheels of railway vehicles, proposing a device and a non-contact measuring method which allow simultaneously determining the diameter and the contact section of a wheel of a moving railway vehicle, regardless of the orientation and location of the axis of the measured wheel, a precision of 0.5 mm in the measurement of the diameter and a precision of 0.1 mm in the section being obtained.

State of the Art

The wheels are one of the most important structural components on a railway vehicle. Said wheels are subjected to many mechanical stresses which can cause several types of breakdowns due to fatigue of their component material. These breakdowns influence the operation of the moving vehicle as well as the comfort of the passengers travelling on it.

A corrective maintenance of the wheels of the railway vehicle based on their re-shaping must be carried out for avoiding these problems. Leaving the contact section of the wheel according to parameters authorised by railway regulations, such as height of the flange, thickness of the flange, qR factor, distance between the inner wheel faces (DIF), or distance between the active wheel faces (DAF) is achieved by means of this corrective maintenance.

In this regard, knowing the condition of the sections of the wheels of the railway vehicles becomes necessary for determining the wear which they have suffered and thus be able to evaluate if they comply with the required parameters and if it is necessary to re-shape them. Different evaluation devices and methods for evaluating the contact sections of the railway wheels are already known for this purpose.

There are methods which are based on inspecting the wheels in a workshop with the vehicle stopped, using manual inspection techniques by means of gauges or similar elements, or automatic inspection techniques by means of laser equipment which are arranged facing the contact surface of the wheel, but these techniques force an inspection with the vehicle stopped and out of service to be carried out, with the consequent loss of time which it implies.

There are also measuring methods which allow knowing the contact section of the wheels with the vehicle in motion, i.e., in service. Some of these methods imply modifying the structure of the contact rails for incorporating laser measuring systems therein which evaluate the contact section of the wheel when it passes over the measuring system. This solution implies an excessive cost since it forces modifying the structure of the running rail.

On the other hand, there are other measuring methods based on machine vision which allow knowing the contact section with the vehicle in motion without the need of modifying the structure of the running rail; these methods being based on the use of projectors emitting light beams which are reflected on the section of the wheel and machine vision cameras capturing images of the light beams reflected on the wheel, the captured images subsequently being analysed for determining the contact section of the wheel.

The accuracy and precision of the measurements of these methods are insufficient since they assume that the wheel of the vehicle is orientated perfectly vertical on the running rail, while in true track conditions the axis of the wheel can have any orientation. Because these methods do not have an exact orientation of the axis of the wheel, they make precision errors at the time of determining the diameter and the section of the wheel.

For this reason, these methods need to have measuring equipment with many projectors and machine vision cameras which allow obtaining information about the entire wheel to be measured, for example up to four machine vision cameras, which noticeably increases the cost of the measuring equipment.

Furthermore, for being able to obtain precise measurements, the equipment of these methods need to have a very determined measuring geometry, i.e., they need the laser light beam projectors and the cameras to be arranged in very specific positions, needing, for example, light beams which are practically aligned with the axis of the wheel and light beams which are practically perpendicular with the axis of the wheel, the measurements needing to be synchronised with the passing of the wheel. This considerably limits measuring, wasting excessive time when positioning elements of the measuring equipment on the track, and on the other hand can have large losses of accuracy in the measurement when any light projector or camera is misaligned.

Therefore, a measuring system which allows performing a three-dimensional reconstruction of the section of the wheel and of its side faces in moving railway vehicles, regardless of the orientation and location of the axis of the wheel, and regardless of the geometry of the measuring equipment, is necessary.

Object of the Invention

According to the present invention a measuring method and equipment for determining the section and the diameter of the wheel of a moving railway vehicle is proposed, which allows obtaining precise measurements regardless of the orientation and location of the axis of the wheel. Likewise, the method allows the measuring equipment to adopt any geometry, i.e., the measuring elements can be arranged in an arbitrary position.

The measuring method used for determining the section and the diameter of wheels of moving railway vehicles is made up of the following steps:

- Projecting a first structured light beam from a first measuring unit on one end of the inner side face of the wheel, the flange and the contact surface.
- Projecting a second structured light beam from a second measuring unit on one end of the outer side face of the wheel, the contact surface and the flange.
- Measuring the X, Y, Z Cartesian coordinates of all the points of light making up each structured light beam projected on the wheel.
- Calculating a first initial approximation of the spatial orientation and location of the axis of the wheel according to a vector perpendicular to the outer and inner side faces of the wheel.
- Rotating the system of X, Y, Z Cartesian coordinates such that the Y axis of said system is aligned with the approximation calculated for the axis of the wheel.
- Calculating the radius of all the points of light projected on the flange and the contact surface, with respect to each transverse height "Y" of the axis of the wheel calculated in the previous step.
- Determining the differences in radius existing between the points of light of the structured light beams having the same transverse height "Y" of the axis of the wheel.
- Modifying the spatial location and orientation of the axis of the wheel by means of an iterative method minimizing the differences in radius existing between the points along the Y axis duly aligned with the axis of the wheel until the differences in radius existing between the points of light of the structured light beams having the same transverse height "Y" of the axis (R) of wheel are minimal.
- Obtaining the diameter and the section of the flange and the contact surface meeting the spatial location and orientation of the axis of the wheel determined in the previous step.

A measuring method and equipment which only need to send and read information about the flange, contact surface and one end of the inner and outer side faces of the wheel, which allows obtaining precise measurements of the wheel diameter and section close to a tenth, is thus obtained. Likewise, because the measuring method does not assume any predetermined orientation of the axis of the wheel, the measuring units can be arranged in any required geometric position.

The application of the method further results in a greatly reduced cost, not affecting railway vehicle travel safety since it does not interfere with the contact rails and it allows effectively measuring the entire section of the application wheels.

Description of the Drawings

Figure 1 shows a front view of the elements making up the measuring equipment of the invention used for determining the diameter and the section of the wheel of a railway vehicle.

Figure 2 shows an upper view of the measuring equipment of the previous figure.

Figure 3 shows a schematic view with structured light beams projected by respective measuring units on the side faces of the wheel, the flange and the contact surface.

Figure 4A depicts an example of laser lines which are emitted on the section of the wheel from a measuring unit arranged to the left of the running rail.

Figure 4B depicts an example of laser lines which are emitted on the section of the wheel from a measuring unit arranged to the right of the running rail.

Figure 5A depicts an example of laser lines which are emitted on the inner side face of the wheel from the measuring unit arranged to the left of the running rail.

Figure 5B depicts an example of laser lines which are emitted on the outer side face of the wheel from the measuring unit arranged to the right of the running rail.

Figures 6A and 6B show an example of angles defining the vertical and side inclination with which the wheel can move on the running rail.

Figures 7 to 10 show three-dimensional graphical representations of the different phases of the measuring method proposed by the invention for determining the section and the diameter of a wheel of railway vehicles.

Detailed Description of the Invention

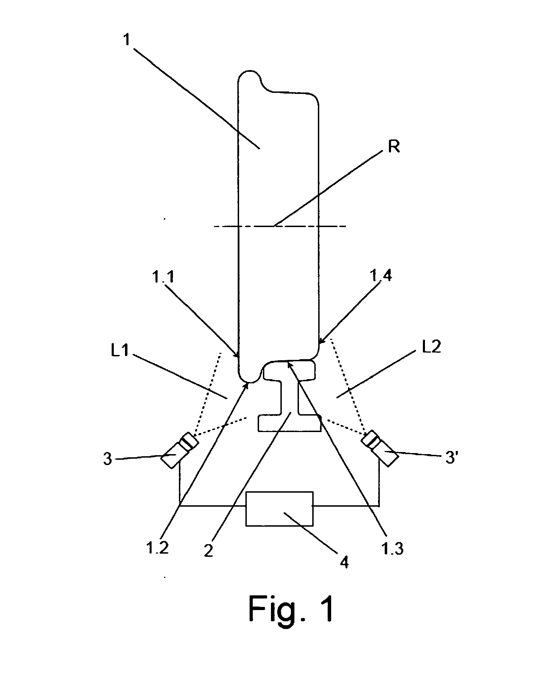

Figure 1 shows measuring equipment for measuring the entire section of a wheel (1) of a moving railway vehicle without the need of modifying the running rail (2) on which the railway vehicle travels and regardless of the orientation of the wheel (1) when it enters the range of the measuring equipment. The equipment and the method proposed by the invention allow reconstructing the entire section of the wheel (1) from the simultaneous measuring performed by measuring units (3, 3') as the wheel (1) passes.

The equipment is made up of at least two vision measuring units (3, 3'), each of which is arranged to one side of the running rail (2) in an arbitrary position. Each vision measuring unit (3, 3') is made up of a light emitter and a vision camera.

For reconstructing the entire section of the wheel (1) the proposed measuring equipment does not need to take measurements on all the areas of the wheel (1), but only on very specific areas, these areas on which measurements are taken corresponding to one end of the inner side face (1.1), the flange (1.2), the contact surface (1.3), and another end of the outer side face (1.4) of the wheel (1). The group of all the indicated areas, i.e., those corresponding to the inner side face (1.1) and outer side face (1.4), the flange (1.2) and the contact surface (1.3) of the wheel (1), is understood as the entire section of the wheel (1) which is the object of the measurement.

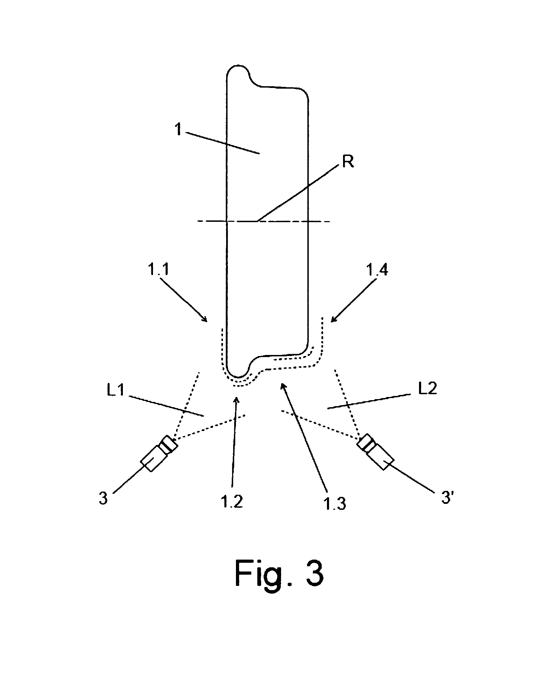

As observed in Figure 3, the light emitter of each vision measuring unit (3, 3') projects a respective structured light beam (L1, L2) on the wheel (1). The structured light beams (L1, L2) can have different light patterns, laser lines, point clouds, network grids, etc., laser lines have been used in the embodiment depicted in the figures.

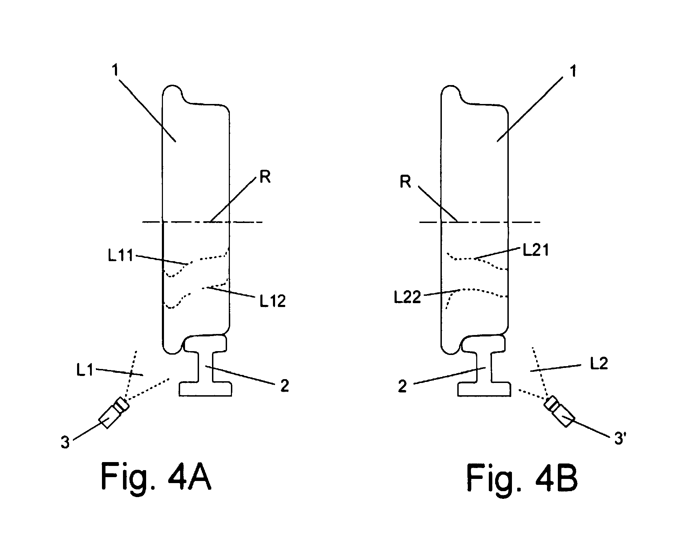

The first measuring unit (3) which is to the left of the running rail (2) thus projects a first structured light beam (L1) made up of laser lines (L11, L12), these laser lines (L11, L12) are projected on the inner side face (1.1) of the wheel (1) and on the flange (1.2) and the contact surface (1.3). As observed in Figures 3 and 4A, the flange (1.2) of the wheel (1) casts a shadow and the laser lines (L11, L12) are reflected discontinuously on the section of the wheel (1).

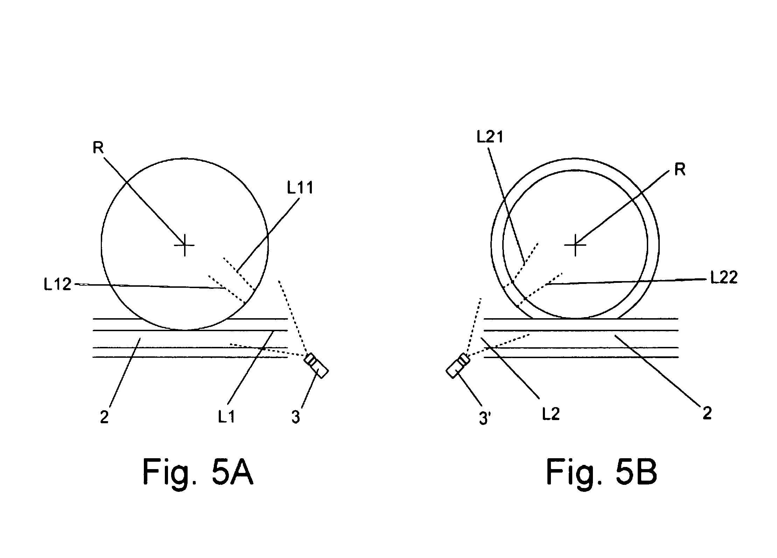

The second measuring unit (3') which is to the right of the running rail (2) projects a second structured light beam (L2) made up of other laser lines (L21, L22), which are projected on the outer side face (1.4) of the wheel (1), on the flange (1.2) and on the contact surface (1.3). In this case the laser lines (L21, L22) are reflected on the entire section of the wheel (1). In the example shown in Figures 1 to 5 only two laser lines emitted by each measuring unit (3, 3') are depicted for the sake of clarity, however precision of the measurement improves the greater the information in the form of lines of light is emitted on the wheel (1).

A processing unit (4) is responsible for measuring the Cartesian coordinates "XYZ" of each structured light beam (L1, L2) emitted by the measuring units (3, 3'), i.e., the longitudinal height "X", the transverse height "Y", and the vertical height "Z" of all the points of light making up the laser lines (L11, L12, L21, L22) emitted on the wheel (1) are measured. All the height "XYZ" measured on the wheel (1) are referenced to one and the same common reference system (system Cartesian coordinates).

A first initial approximation of the orientation of the axis (R) of the wheel (1) is calculated with the heights "XYZ" corresponding to the laser lines (L11, L12, L21, L22) emitted on the outer and inner side faces (1.1 and 1.4) of the wheel (1). This first approximation is obtained by a vector perpendicular to the side faces (1.1, 1.4) of the wheel (1), this vector being defined through two angles $(\alpha, \beta)$. The exact orientation of the axis (R) of the wheel (1) is not known in this first phase of the method, the angles $(\alpha, \beta)$ defining the spatial orientation having to be calculated. Neither are the Cartesian coordinates defining the exact centre of the axis (R) of the wheel (1) known.

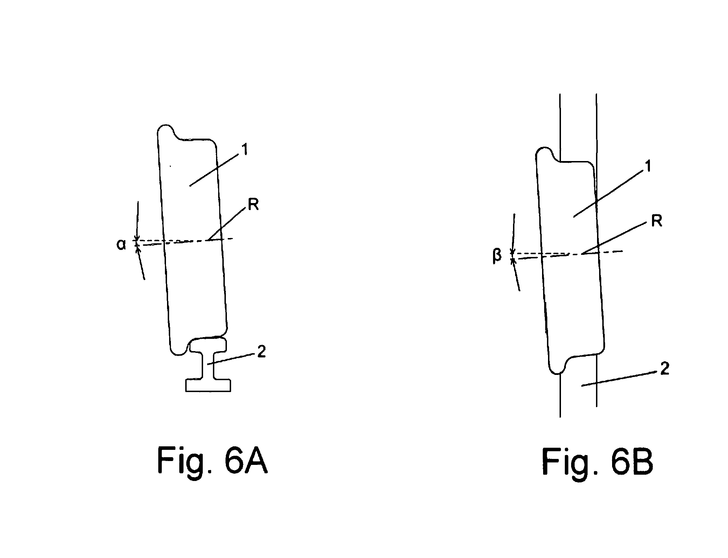

Figures 6A and 6B show an example of the angles $(\alpha, \beta)$ defining the true spatial orientation of the axis (R) of the wheel (1). As indicated above, in true track conditions the wheel (1) can have any orientation, so accurately determining the location and the spatial orientation of the axis (R) of the wheel (1) is necessary for being able to obtain the diameter and the section of the wheel (1) with precision. The angle $(\alpha)$ defines the vertical inclination of the wheel (1) with respect to the running rail (2), specifically it is the angle which the axis (R) of the wheel (1) has been inclined with respect to the horizontal of the surface of the running rail (2). The angle $(\beta)$ defines the side inclination of the axis (R) of the wheel (1) with respect to the running rail (2), specifically it is the angle which the axis (R) of the wheel (1) has been inclined with respect to a plane perpendicular to the running rail (2).

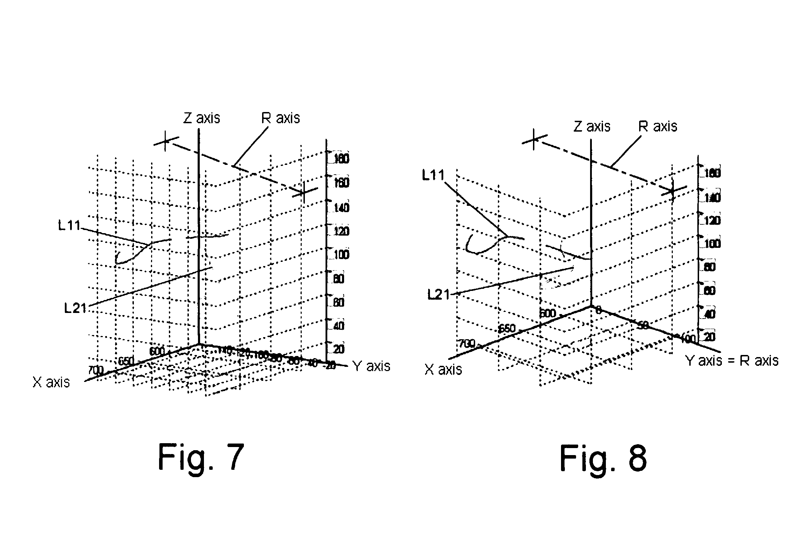

After having determined a first initial approximation of the orientation of the axis (R) of the wheel (1) according to the two angles $(\alpha, \beta)$, a three-dimensional representation of the heights "XYZ" corresponding to the laser lines (L11, L12, L21, L22) emitted on the section of the wheel (1), i.e., the laser lines emitted on the flange (1.2) and on the contact surface (1.3), is carried out. Figure 7 shows an example of said three-dimensional representation, only two laser lines having been depicted for the sake of clarity, one corresponding to the laser line (L11) of the first structured light beam (L1) emitted by the first measuring unit (3), and another corresponding to the laser line (L21) of the second structured light beam (L2) emitted by the second measuring unit (3').

The heights "XYZ" corresponding to the laser lines (L11, L12, L21, L22) emitted on the wheel (1) are referenced according to a system of spatial Cartesian coordinates (X axis, Y axis, Z axis), such that the system of Cartesian coordinates is rotated so that one axis thereof is aligned with the axis (R) of the wheel (1), that is according to the angles $(\alpha, \beta)$. In the example depicted in the Figures 7 and 8, the Y axis of the system of Cartesian coordinates is aligned with the axis (R) of the wheel (1). This alignment of the Y axis with the axis (R) of the wheel (1) allows correctly measuring the section and diameter of the wheel (1) regardless of the relative orientation of the wheel (1) in the angles $(\alpha, \beta)$ when passing by the measuring units (3, 3').

Figure 7 shows the laser lines (L11, L21) and the axis (R) of the wheel (1) depicted in a system of spatial Cartesian coordinates, and Figure 8 shows the laser lines (L11, L21) and the axis (R) of the wheel (1) in a system of Cartesian coordinates wherein the axis (Y) is aligned with respect to the axis (R) of the wheel (1).

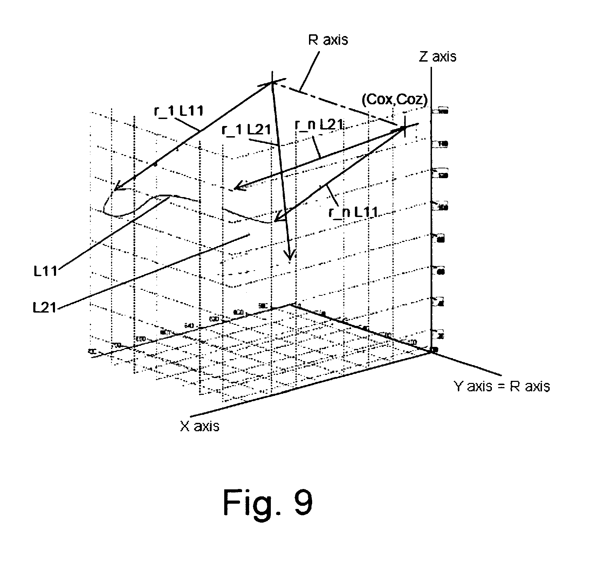

Likewise, an initial approximation of the spatial location of the axis (R) of the wheel (1) is used. To that end an arbitrary initial location of the axis (R) of the wheel (1) is assumed according to longitudinal height "X", transverse height "Y" and vertical height "Z" (Cox, Coy, Coz) arranged on a plane perpendicular to the axis (R) of the wheel (1), in the example of Figure 9 the XZ plane perpendicular to the axis (Y), the axis (Y) being aligned with the axis (R) of the wheel (1) as indicated above. As the origin of transverse coordinates (Coy) in the axis (R) of the wheel (1), which is the axis (Y) in the depicted figures, the mean value of the heights "Y" of the points of light corresponding to the laser lines (L11, L12, L21, L22) emitted on the inner side face (1.1) of the wheel (1) are taken.

The axis (R) of the wheel (1) defined according to parameters, which are subsequently calculated for precisely determining the section and diameter of the wheel (1), is thus obtained, these parameters being the angles ($\alpha$, $\beta$) defining the spatial orientation of the axis (R) of the wheel (1), and the longitudinal height "X" and vertical height "Z" (Cox, Coz) defining the spatial location of the axis (R) of the wheel (1). The transverse height "Y" (Coy) of the axis (R) of wheel has already been calculated in the previous step.

All the laser lines (L11, L12) emitted by the first measuring unit (3) are compared with all the laser lines (L21, L22) emitted by the second measuring unit (3') for determining these four parameters ($\alpha$, $\beta$, Cox, Coz). The comparison is based on determining the difference in radius observed between the laser lines (L11, L12) emitted by the first measuring unit (3) and the laser lines (L21, L22) emitted by the second measuring unit (3'). The comparison can also be made between the actual laser lines (L11, L12) emitted by the first measuring unit (3), or between the actual laser lines (L21, L22) emitted by the second measuring unit (3').

The radius of each point of light reflected on the section of the wheel (1) formed by the flange (1.2) and the contact surface (1.3), from both measuring units (3, 3'), for each transverse height "Y" along the axis (R) of the wheel (1) is thus calculated. Radius is understood as the distance between a point of light reflected on the section of the wheel (1) and a transverse height "Y" of the axis (R) of the wheel (1).

The radius of each point of light for each transverse height "Y" of the axis (R) of the wheel (1) corresponds to the following equation:

$$Radius = \sqrt{x^2 + z^2}$$

where "X" and "Z" are the respective longitudinal and transverse heights of each point of light of the laser lines (L11, L12, L21, L22) projected on the wheel (1).

Once all the radii of all the points of light projected on the section of the wheel (1) for each transverse height "Y" of the axis (R) of the wheel (1) have been calculated, differences in radius are determined. This is, the differences in radius existing between all the points of light having the same transverse height "Y" of the axis (R) of the wheel (1) between the different laser lines (L11, L12, L21, L22) emitted by the measuring units (3, 3') are determined.

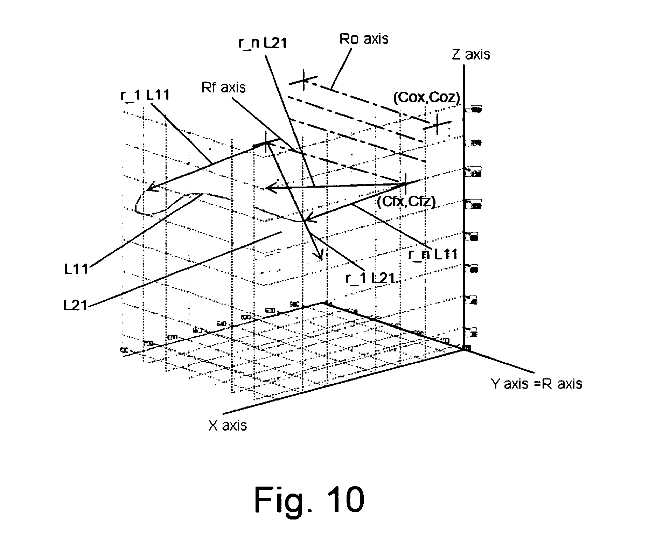

As observed in the example shown in Figure 9, for each point of light making up the laser lines (L11, L21) the radii (r_1L11,..., r_nL11; r_1L21,..., r_nL21) are calculated with respect to each transverse height "Y" of the axis (R) of the wheel (1). Subsequently, as observed in Figure 10, an iterative calculation is performed for cor-

recting the four parameters ($\alpha$, $\beta$, Cox, Coz) and, therefore, modifying the spatial location and orientation of the axis (R) of the wheel (1) from a first initial approximation indicated in Figure 10 with reference (Ro) to a final orientation and location indicated with reference (Rf), this final axis (Rf) of the wheel (1) coinciding with the true spatial location and orientation of the axis (R) of the wheel (1).

The criterion for determining the final orientation (angles $\alpha$, $\beta$) and location (Cfx,Cfz) of the axis (R) of the wheel (1) is that said orientation is that in which the radii for any height "XYZ" of the lines (L11, L21) emitted on the section of the wheel (1) are the same for one and the same transverse height "Y" along the axis (R) of the wheel (1). As observed in Figure 10, where two laser lines (L11 and L21) are thus compared, the spatial location and orientation of the axis (R) of the wheel (1) is modified until the first radius (r_1L11) of the laser line (L11) emitted by the first measuring unit (3) coincides with the first radius (r_1L21) of the laser line (L21) emitted by the second measuring unit (3') and so on until the last radius (rn_L11) of the laser line (L11) coincides with the last radius (rn_L21) of the laser line (L21).

The correction of the four parameters ($\alpha$, $\beta$, Cox, Coz) required for minimising the differences in radius existing between points of light of different laser lines emitted on the section of the wheel (1) at the same transverse height "Y" of the axis (R) of the wheel (1), and for all the points along the axis (R) of the wheel (1), is determined through a Gauss-Newton method for minimising multivariable functions.

The Gauss-Newton method requires as input values the partial derivatives of the radius errors in each height of the axis (R) of the wheel (1) with respect to each parameter ($\alpha$, $\beta$, Cox, Coz) and the differences in radius existing between the points of light having the same transverse height "Y" of the axis (R) of the wheel (1), between the different laser lines (L11, L12, L21, L22) emitted by the measuring units (3, 3'). The four parameters ($\alpha$, $\beta$, Cox, Coz) which determine the spatial orientation and location of the axis (R) of the wheel (1) are thus determined, such that the laser lines meeting those parameters ($\alpha$, $\beta$, Cox, Coz) will correspond with the true section of the wheel (1), i.e., the section of the flange (1.2) and the contact surface (1.3). With the section of the wheel (1) having thus been obtained the height and the thickness of the flange (1.2), the qR factor, the parameters (DIF) and (DAF) can be calculated and it can be verified if these variables comply with railway regulations, and therefore verified if carrying out a re-shaping of the section of the wheel (1) is necessary.

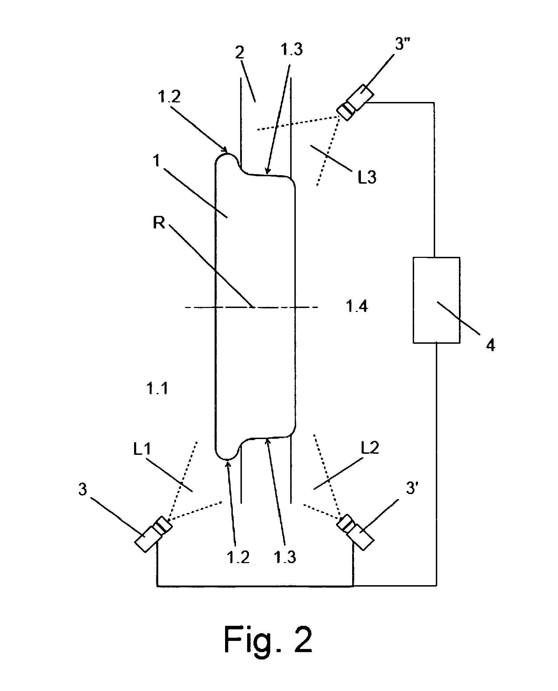

Figure 2 shows a third measuring unit (3") performing redundant functions of the second measuring unit (3'). In some cases the railway vehicles have sanding gears for throwing sand on the contact surface (1.3) of the wheel (1) for increasing adherence, these sanding gears can be indistinctly located on either side of the wheel (1) along the direction of the running rail (2), in this case the presence of sanding gears can make the measuring of the second measuring unit (3') difficult, so the third redundant measuring unit (3") is used, which emits a structured light beam (L3) similar to the structured light beam (L2) on one end of the outer side face (1.4) of the wheel (1), the contact surface (1.3) and the flange (1.2).

## Claims

1. A measuring method for determining the section and the diameter of wheels of moving railway vehicles, wherein the section of the flange (1.2) and the contact surface (1.3) of a wheel (1) is determined for comparing it with parameters preestablished by railway regulations, **characterised in that** the method comprises the following steps:

   - Projecting a first structured light beam (L1) from a first measuring unit (3) on one end of the inner side face (1.1) of the wheel (1), the flange (1.2) and the contact surface (1.3)
   - Projecting a second structured light beam (L2) from a second measuring unit (3') on one end of the outer side face (1.4) of the wheel (1), the contact surface (1.3) and the flange (1.2)
   - Measuring the X, Y, Z Cartesian coordinates of all the points of light making up each structured light beam (L1, L2) projected on the wheel (1)
   - Calculating a first initial approximation of the spatial orientation and location of the axis (R) of the wheel (1) according to a vector perpendicular to the outer and inner side faces (1.1, 1.4) of the wheel (1)
   - Rotating the system of X, Y, Z Cartesian coordinate such that the axis (Y) of said system is aligned with the approximation calculated for the axis (R) of the wheel (1).
   - Calculating the radius of all the points of light projected on the flange (1.2) and the contact surface (1.3) with respect to each transverse height "Y" of the axis (R) of the wheel (1) calculated in the previous step
   - Determining the differences in radius existing between the points of light of the structured light beams (L1, L2) having the same transverse "Y" of the axis (R) of the wheel (1)
   - Modifying the spatial location and orientation of the axis (R) of the wheel (1) by means of an iterative method minimizing the differences in radius existing between the points along the axis (Y) duly aligned with the axis (R) of the wheel (1) until the differences in radius existing between the points of light of the structured light beams (L1, L2) having the same transverse height "Y" of the axis (R) of the wheel (1) are minimal

   - Obtaining the diameter and the section of the flange (1.2) and the contact surface (1.3) meeting the spatial location and orientation of the axis (R) of the wheel (1) determined in the previous step.

2. The measuring method for determining the section and the diameter of wheels of moving railway vehicles according to claim 1, **characterised in that** the structured light beams (L1, L2) are laser lines , point clouds or network grids.

3. The measuring method for determining the section and the diameter of wheels of moving railway vehicles according to claim 1, **characterised in that** the radius of the points of light projected on the flange (1.2) and the contact surface (1.3), with respect to each transverse height "Y" of the axis (R) of the wheel (1), corresponds to the following equation:

$$Radius = \sqrt{x^2 + z^2}$$

   where "X" and "Z" are the respective longitudinal and transverse heights of each point of light.

4. The measuring method for determining the section and the diameter of wheels of moving railway vehicles according to claim 1, **characterised in that** the orientation of the axis (R) of the wheel (1) is defined by two angles ($\alpha$, $\beta$) and the spatial location of the axis (R) of the wheel (1) by longitudinal height "X", transverse height "Y" and vertical height "Z" (Cox, Coy, Coz) arranged in a plane perpendicular to the axis (R) of the wheel (1).

5. Measuring equipment for measuring the section and the diameter of wheels of railway vehicles using the method of claim 1, **characterised in that** it is made up of:

   A first measuring unit (3) located on the left side of the running rail (2) which emits a structured light beam (L1) on one end of the inner side face (1.1) of the wheel (1), the flange (1.2) and the contact surface (1.3);
   a second measuring unit (3') located on the right side of the running rail (2) which emits a structured light beam (L2) on one end of the outer side face (1.4) of the wheel (1), the contact surface (1.3) and the flange (1.2); and
   a processing unit (4) for processing the information sent and received by the measuring units (3, 3') which determines the section and the diameter of the wheel (1).

6. The measuring equipment for measuring the section and the diameter of wheels of railway vehicles according to the preceding claim, **characterised in that** redundantly with respect to the second measuring unit (3') there is arranged a third measuring unit (3") located on the right side of the running rail (2) which emits a structured light beam (L3) on one end of the outer side face (1.4) of the wheel (1), the contact surface (1.3) and the flange (1.2).

7. The measuring equipment for measuring the section and the diameter of wheels of railway vehicles according to claims 5 and 6, **characterised in that** each measuring unit (3, 3', 3") is made up of a light emitter and a vision camera.

Fig. 1

Fig. 2

Fig. 3

Fig. 4A                    Fig. 4B

Fig. 5A

Fig. 5B

Fig. 6A

Fig. 6B

EP 2 667 149 A1

Fig. 7

Fig. 8

Fig. 9

Fig. 10

**EUROPEAN SEARCH REPORT**

Europäisches
Patentamt
European
Patent Office
Office européen
des brevets

Application Number

EP 12 38 0026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/072001 A1 (MIAN ZAHID F [US] ET AL) 17 April 2003 (2003-04-17)<br>* paragraphs [0129] - [0132]; figures 2,3 *<br>* paragraphs [0157] - [0171]; figure 13 * | 1-7 | INV.<br>G01B11/10<br>G01B11/245<br>G01B11/25<br>B61K9/12 |
| A | RU 2 268 183 C1 (ZAV'JALOV PETR SERGEEVICH ET AL) 20 January 2006 (2006-01-20)<br>* abstract * | 1-7 | |
| A | CN 100 999 220 A (HANGZHOUN UNIV OF ELECTRONIC S [CN]) 18 July 2007 (2007-07-18)<br>* the whole document * | 1-7 | |
| A | US 5 619 587 A (WILLOUGHBY JR LOUIS G [US] ET AL) 8 April 1997 (1997-04-08)<br>* column 3, lines 41-62 * | 1-7 | |

TECHNICAL FIELDS
SEARCHED      (IPC)

G01B
B61K

The present search report has been drawn up for all claims

| Place of search | Date of completion of the search | Examiner |
|---|---|---|
| Munich | 24 October 2012 | Dighaye, Jean-Luc |

EPO FORM 1503 03.82 (P04C01)

## ANNEX TO THE EUROPEAN SEARCH REPORT
## ON EUROPEAN PATENT APPLICATION NO.

EP 12 38 0026

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2012

| Patent document cited in search report | | Publication date | Patent family member(s) | Publication date |
|---|---|---|---|---|
| US 2003072001 | A1 | 17-04-2003 | NONE | |
| RU 2268183 | C1 | 20-01-2006 | NONE | |
| CN 100999220 | A | 18-07-2007 | NONE | |
| US 5619587 | A | 08-04-1997 | NONE | |

EPO FORM P0459

For more details about this annex : see Official Journal of the European Patent Office, No. 12/82